# EUROPÄISCHE PATENTANMELDUNG

(11) **EP 2 883 767 A2**
(43) Veröffentlichungstag der Anmeldung: **17.06.2015**
(21) Anmeldenummer: 14466026.3
(22) Anmeldetag: 09.12.2014
(51) Int. Cl.: B60T 13/58, B60T 13/74, F16D 51/50, F16D 65/38, F16D 121/24

(54) **Trommelbremse**

(30) Priorität: 10.12.2013 CZ 20130991
(71) Anmelder: Skoda Auto A.S., 293 60 Mladá Boleslav (CZ)
(72) Erfinder: Hrdlicka, Martin, 29301 Mladá Boleslav (CZ)

(57) **Zusammenfassung**

Trommelbremse (1) für ein Kraftfahrzeug, insbesondere die hintere hydraulisch betätigte Trommelbremse (1), wo zur Einstellung des gewünschten Lüftspiels x zwischen der Bremstrommel (5) und den Bremsbacken (2) statt eines mechanischen Nachsteller die elektronische Parkbremse (10) verwendet wird, wo aufgrund des strombedingten Anstiegs der Speisespannung des Elektro-Schrittmotors (11) unter Mitwirkung der Steuereinheit (12) automatisch das gewünschte Lüftspiel (x) eingestellt wird.

## Beschreibung

### Technisches Gebiet

Die Erfindung betrifft eine Trommelbremse für ein Kraftfahrzeug, insbesondere die hintere hydraulisch betätigte Trommelbremse mit elektromechanischem System der Spieleinstellung.

### Bisheriger Stand der Technik

Derzeit werden bei Kraftfahrzeugen hydraulisch betätigten Trommelbremsen verwendet, wo nach dem Durchtreten des Bremspedals durch den Radbremszylinder Kraft erzeugt wird, mit der die Bremsbacken mit den Bremsbelegen gegen die Bremstrommel gedrückt werden. Bestandteil der Trommelbremse ist auch eine Feststellbremse, deren mechanische Ausführung durch eine elektromotorische Feststellbremse ersetzt wird. Weiterer Bestandteil dieser Art der Bremse ist ein Mechanismus, dessen Aufgabe es ist, das Lüftspiel zwischen den Bremsbelägen und der Bremstrommel einzustellen, d.h. ein gleiches Lüftspiel zwischen dem Bremsbelag und der Bremstrommel sicherzustellen, das sich sonst infolge des Verschleißes der Bremsbeläge bei dem Betrieb des Kraftfahrzeuges gegenüber der Bremstrommel vergrößern könnte. Das vergrößerte Lüftspiel würde unerwünschte Verlängerung des Bremspedalweges verursachen. Der vorgenannte Mechanismus, auch als Nachsteller genannt, kann konstruktiv verschieden ausgeführt werden, bekannterweise z.B. mit einem Nachstellkeil, einer Nachstellschraube usw. Die genannten Nachsteller bestehen aus mehreren Teilen, deren Fertigung und Montage aufwändig ist.

Ziel der vorliegenden erfindungsgemäßen Lösung ist die Vereinfachung der Konstruktion der Trommelbremse, indem die mechanische Einstellung des Lüftspiels automatisch unter Nutzung der elektronischen Parkbremse erfolgt.

### Darstellung der Erfindung

Die Aufgabe wird durch eine Trommelbremse für ein Kraftfahrzeug gelöst, die aus einer Bremstrommel und den schwenkbar angeordneten Bremsbacken mit Bremsbelägen besteht, wo jede Bremsbacke eine Nut aufweist, in der ein Spreizelement gelagert ist, wobei eine der Backen einen schwenkbar angeordneten Spreizhebel der Feststellbremse mit Aussparung aufweist, in die das Spreizelement eingreift, ferner umfasst die Trommelbremse eine elektronische Parkbremse, die einen Elektromotor umfasst, der mittels eines Bowdenzugs mit dem Spreizhebel der Feststellbremse verbunden und an eine Steuereinheit angeschlossen ist, welche mit einem Betätigungselement verbunden ist, wobei der Spreizhebel der Feststellbremse und die kinematisch angeschlossenen Bremsbacken bei der Aktivierung der elektronischen Parkbremse aus einer ungebremsten in eine gebremste Stellung um den Wert des Lüftspiels verstellbar sind. Die Darstellung der Erfindung liegt darin, dass nach der Aktivierung der elektronischen Feststellbremse, wenn die Bremsbacken an die Bremstrommel anliegen, aufgrund des strombedingten Anstiegs der Speisespannung des Elektro-Schrittmotors die angeschlossene Steuereinheit der gebremsten Stellung einen Referenzstromwert I_{R} zuordnet, dem ein Referenzweg des Elektro-Schrittmotors entspricht. Infolge des Verschleißes der Bremsbeläge und der Bremstrommel während des Fahrzeugbetriebs vergrößert sich das Lüftspiel, sodass bei diesem vergrößerten Wert und nach der Aktivierung der elektronischen Feststellbremse, wenn die Bremsbacken an die Bremstrommel aufsetzen, ein strombedingter Anstieg der Speisespannung des Elektro-Schrittmotors bewirkt wird, die dem Referenzstromwert entspricht und sich in einem um den Korrekturwert längeren Weg des Elektro-Schrittmotors auswirkt. Nach Deaktivierung der elektronischen Feststellbremse stellt sich der Elektro-Schrittmotor in die korrigierte Position im ungebremsten Zustand ein, die anhand der Auswertung der Steuereinheit um den Korrekturwert herabgesetzt wird.

### Übersicht der Figuren der Zeichnungen

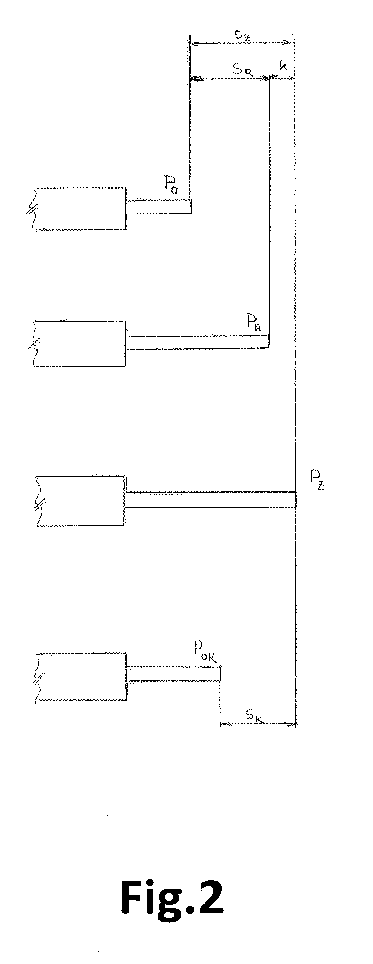

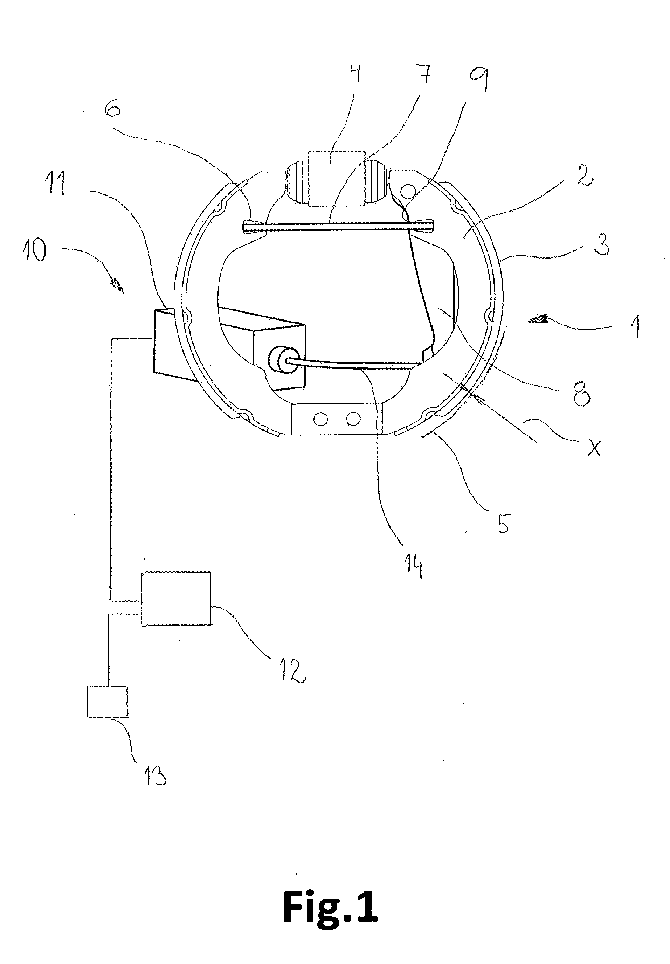

Die Erfindung wird näher anhand der Ausführungsbeispiele gemäß den beigefügten Zeichnungen erläutert, in denen zeigen die Fig. 1 schematisch die Ausführung der Trommelbremse mit Steuereinheit, Fig. 2 schematisch die Positionen des Elektro-Schrittmotors in Abhängigkeit von den Betriebsbedingungen.

### Ausführungsbeispiel der Erfindung

Wie der Fig. 1 zu entnehmen ist, besteht eine Trommelbremse 1 aus einer Bremstrommel 5 und den Bremsbacken 2, die Bremsbeläge 3aufweisen, wo die Bremsbacken 2 einerseits schwenkbar an dem Bremsschild (nicht dargestellt) angeordnet und anderseits mit hydraulisch betätigten Radbremszylinder 4 verbunden sind. Zwischen den Bremsbelägen 3 und der Bremstrommel 5 ist fabrikseitig ein Lüftspiel x eingestellt. Jede Bremsbacke 2 weist eine Nut 6 für Lagerung des Spreizelementes 7 auf. An einer der Bremsbacken 2 ist ein Spreizhebel der Feststellbremse 8 schwenkbar angeordnet, die eine Aussparung 9 aufweist, in die das Spreizelement 7 eingreift. Die Trommelbremse 1 umfasst ferner eine elektronische Parkbremse 10, die gebildet wird durch einen Elektro-Schrittmotor 11, der mit einer entsprechenden Steuereinheit 12 verbunden ist, zu der ein Betätigungselement 13 angeschlossen ist. Der Elektro-Schrittmotor 11 ist mittels eines Bowdenzugs 14 mechanisch mit dem Spreizhebel der Feststellbremse 8 verbunden.

Die elektronische Parkbremse 10 wird so aktiviert, dass nach dem Schalten des Betätigungselementes 13 die Steuereinheit 12 ein Befehl sendet, aufgrund dessen der Elektro-Schrittmotor 11 gedreht wird, der über den Bowdenzug 14 und den Spreizhebel der Feststellbremse 8 die Bremsbacken 2 zur Bremstrommel 5 anzieht, wodurch das Kraftfahrzeug gebremst wird. Nach Deaktivierung des Betätigungselementes 13 sendet die Steuereinheit 12 ein Befehl aus, aufgrund dessen der Elektro-Schrittmotor 11 in die andere Richtung gedreht wird und durch die Einwirkung der Feder (nicht dargestellt) die Bremsbacken 2 von der Bremstrommel 5 weggezogen werden und das Fahrzeug dadurch entbremst wird. Das Lüftspiel x zwischen den Bremsbelägen 3 und der Bremstrommel 5 ist während des Kraftfahrzeugbetriebs nicht konstant und muss durchgehend infolge des Verschleißes der Bremsbeläge 3 und der Bremstrommel 5 auf das Vorgabewert nachgestellt werden. Die Nachstellung erfolgt so, dass bei der Aktivierung der elektronischen Parkbremse 10 der Elektro-Schrittmotor 11 gedreht wird, der über den Bowdenzug 14 und den Spreizhebel der Feststellbremse 8 diese so anzieht, bis die Bremsbacken 2 bzw. die Bremsbeläge 3 zur Bremstrommel 5 mit solcher Kraft angepresst werden, die für das Festhalten des Fahrzeuges am Hang bei der Aktivierung der Feststellbremse erforderlich ist. Die Bremsbacken 2 verschieben sich also aus der entbremsten Stellung O, wenn der Elektro-Schrittmotor in der Position P_{O} ist, in die gebremste Stellung Z, wenn der Elektro-Schrittmotor in der Position P_{R} ist, was dem Referenzweg s_{R} entspricht. Aus dem strombedingten Anstieg der Speisespannung des Elektro-Schrittmotors 11 wird die aktuelle gebremste Stellung Z ausgewertet und dieser Wert wird dann in der Software der Steuereinheit 12 als Referenzstromwert I_{R} eingestellt.

Wie bereits angeführt, tritt während des Kraftfahrzeugbetriebes durch die Bremsung der Verschleiß sowohl der Bremsbeläge 3, wie auch der Bremstrommel 5 auf, wodurch sich der Wert des Lüftspiels x zwischen den Bremsbelägen 3 und der Bremstrommel 5 auf den Wert x₂ = x + Δx vergrößert. Die Folge der Vergrößerung des Lüftspiels x auf den Wert x₂ ist, dass nach der Aktivierung der elektronischen Parkbremse 10, wenn sich die Bremsbacken 2 aus der entbremsten Stellung O in die gebremste Stellung Z verschieben, der Elektro-Schrittmotor 11 einen längeren Weg sZZ aus der Position P_{O} in die Position P_{Z} zurücklegen muss, bis die Bremsbeläge 3 auf die Bremstrommel 5 aufsetzen und so auch den strombedingten Anstieg der Speisespannung entsprechend dem Referenzwert I_{R} bewirken, der dem auf das Wert x₂ = x + Δx vergrößerten Lüftspiel entspricht. Die Differenz zwischen der Position des Elektro-Schrittmotors 11 in dem geänderten Zustand P_{Z} bei gebremsten Stellung Z und der Referenzposition des Elektro-Schrittmotors P_{R} stellt die Korrektur k dar. Nach Deaktivierung der elektronischen Parkbremse 10 und nachfolgender Auswertung und dem Abzug der Korrektur k durch die Steuereinheit 12 wird der Elektro-Schrittmotor 11 aus der Position P_{Z} in die Position P_{OK} verstellt, was den korrigierten Weg S_{K} darstellt, der dem gewünschten Lüftspiel x zwischen den Bremsbelägen 3 und der Bremstrommel 5 entspricht. Der genannte Zyklus wird bei jeder Aktivierung der elektronischen Parkbremse 10 wiederholt.

### Bezugszeichenliste

- 1.: Trommelbremse
- 2.: Bremsbacke
- 3.: Bremsbelag
- 4.: Radbremszylinder
- 5.: Bremstrommel
- 6.: Nut
- 7.: Spreizelement
- 8.: Spreizhebel der Feststellbremse
- 9.: Aussparung
- 10.: Parkbremse
- 11.: Elektro-Schrittmotor
- 12.: Steuereinheit
- 13.: Betätigungselement
- 14.: Bowdenzug
- x: Lüftspiel
- x₂: vergrößertes Lüftspiel
- Δₓ: Zuwachs des Lüftspiels
- O: entbremste Stellung
- Z: gebremste Stellung
- I_{R}: Referenzstromwert
- P_{O}: Position des Elektro-Schrittmotors im entbremsten Zustand
- P_{R}: Referenzposition des Elektro-Schrittmotors
- P_{Z}: Position des Elektro-Schrittmotors im veränderten Zustand
- P_{OK}: Position des Elektro-Schrittmotors in dem korrigierten entbremsten Zustand
- k: Korrektur
- S_{R}: Referenzweg
- s_{Z}: veränderter Weg
- s_{K}: korrigierter Weg

## Patentansprüche

1. Trommelbremse (1) für ein Kraftfahrzeug bestehend aus einer Bremstrommel (5) und schwenkbar angeordneten Bremsbacken (2) mit Bremsbelägen (3), wo jede Bremsbacke (2) eine Nut (6) aufweist, in der ein Spreizelement (7) gelagert ist, wobei eine der Bremsbacken (2) einen schwenkbar angeordneten Spreizhebel der Feststellbremse (8) mit Aussparung (9) aufweist, in die das Spreizelement (7) eingreift, ferner umfasst die Trommelbremse (1) eine elektronische Parkbremse (10) mit einem Elektro-Schrittmotor (11), der mittels eines Bowdenzugs (14) mit dem Spreizhebel der Feststellbremse (8) verbunden und an eine Steuereinheit (12) angeschlossen ist, welche mit einem Betätigungselement (13) verbunden ist, wobei der Spreizhebel der Feststellbremse (8) und die kinematisch angeschlossenen Bremsbacken (2) bei der Aktivierung der elektronischen Parkbremse (10) aus einer entbremsten Stellung (O) in eine gebremste Stellung (Z) um den Wert des Lüftspiels (x) verstellbar sind, **dadurch gekennzeichnet, dass** nach der Aktivierung der elektronischen Feststellbremse (10), wenn die Bremsbacken (2) an die Bremstrommel (5) anliegen, aufgrund des strombedingten Anstiegs der Speisespannung des Elektro-Schrittmotors (11) die angeschlossene Steuereinheit (12) der gebremsten Stellung (Z) einen Referenzstromwert (I_{R}) zuordnet, dem ein Referenzweg (s_{R}) des Elektro-Schrittmotors (11) entspricht.

2. Trommelbremse (1) nach Anspruch 1 **dadurch gekennzeichnet, dass** bei dem infolge des Verschleißes vergrößerten Lüftspielwert x₂ = x + Δx und nach Aktivierung der elektronischen Parkbremse (10), wenn die Bremsbacken (2) in einer gebremsten Stellung (Z) sind, in der ein strombedingter Anstieg der Speisespannung des Elektro-Schrittmotors (11) entsprechend dem Referenzstromwert (I_{R}) bewirkt wird, befindet sich der Elektro-Schrittmotor (11) in der geänderten Position (P_{Z}) gemäß dem Wert s_{z} = sᵣ + k, wobei nach Deaktivierung der elektronischen Parkbremse (11) der Elektro-Schrittmotor (11) die Position (P_{K}) einnimmt, der ein Wert s_{K} = s_{Z} - k entspricht.
